(19) Europäisches Patentamt / European Patent Office / Office européen des brevets

(11) **EP 4 450 655 A1**

(12) **EUROPEAN PATENT APPLICATION**
published in accordance with Art. 153(4) EPC

(43) Date of publication:
**23.10.2024 Bulletin 2024/43**

(21) Application number: **23756462.0**

(22) Date of filing: **16.02.2023**

(51) International Patent Classification (IPC):
*C21D 8/12* (2006.01)  *C22C 38/00* (2006.01)
*C22C 38/60* (2006.01)  *H01F 1/147* (2006.01)

(52) Cooperative Patent Classification (CPC):
**C21D 8/12; C22C 38/00; C22C 38/60; H01F 1/147;**
Y02P 10/20

(86) International application number:
**PCT/JP2023/005574**

(87) International publication number:
**WO 2023/157938 (24.08.2023 Gazette 2023/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.02.2022 JP 2022024307**

(71) Applicant: **JFE Steel Corporation
Tokyo 100-0011 (JP)**

(72) Inventors:
• **IMAMURA, Takeshi**
  **Tokyo 100-0011 (JP)**
• **YOSHIKAWA, Ayaka**
  **Tokyo 100-0011 (JP)**
• **YAMAGUCHI, Hiroi**
  **Tokyo 100-0011 (JP)**

(74) Representative: **Haseltine Lake Kempner LLP
Bürkleinstrasse 10
80538 München (DE)**

(54) **METHOD FOR MANUFACTURING GRAIN-ORIENTED ELECTRICAL STEEL SHEET**

(57)    We propose a method of producing a grain-oriented electrical steel sheet having improved magnetic flux density in material using an inhibitor. For a steel slab having a defined chemical composition, the temperature at the end of rough rolling by hot rolling and the time from the end of rough rolling to the start of finishing rolling satisfy a defined relationship, and time to reach 900 °C from 600 °C is 50 s or less.

*FIG. 2*

Rough rolling finish temperature: T-r (°C)

**Description**

TECHNICAL FIELD

The present disclosure relates to a method of producing a grain-oriented electrical steel sheet suitable for use as an iron core material of a transformer.

BACKGROUND

A grain-oriented electrical steel sheet is a soft magnetic material used as an iron core material of transformers, large generators, and the like, and has a crystalline texture in which the <001> axis of crystal orientation, which is an easy magnetization axis of iron, is highly accorded with the rolling direction of the steel sheet. Such a crystalline texture is achieved by secondary recrystallization that preferentially grows giant crystal grains in the {110} <001> orientation, referred to as Goss orientation.

In a method of producing such a grain-oriented electrical steel sheet, a typical technique is used of causing grains having Goss orientation to undergo secondary recrystallization during secondary recrystallization annealing using precipitates called inhibitors.

For example, a method using AlN and MnS described in Patent Literature (PTL) 1, a method using MnS and MnSe described in PTL 2, and the like have been put into industrial practice. Although these methods using inhibitors require slab heating at high temperatures of 1300 °C or more for complete solid solution of inhibitor components, the methods are very useful for stable development of secondary recrystallized grains.

Further, in order to enhance the function of such inhibitors, a method utilizing Pb, Sb, Nb, and Te is described in PTL 3, and a method utilizing Zr, Ti, B, Nb, Ta, V, Cr, and Mo is described in PTL 4.

Further, in PTL 5, a method is proposed to precipitate (Al, Si)N during secondary recrystallization annealing for use as an inhibitor by preparing a slab containing 0.010 % to 0.060 % acid-soluble Al (sol.Al), keeping slab heating at a low temperature, and nitriding in an appropriate nitriding atmosphere during a decarburization annealing process.

Many methods called nitriding methods have been proposed to perform nitriding treatment in such an intermediate process and use (Al, Si)N or AlN as an inhibitor.

On the other hand, for a material containing no inhibitor components, a technique for developing crystal grains having Goss orientation through secondary recrystallization is described in PTL 6, for example. This technique eliminates impurities such as inhibitor components as much as possible and realizes grain boundary misorientation angle dependence of grain boundary energy possessed by crystal grain boundaries during primary recrystallization, thereby causing secondary recrystallization of grains having Goss orientation without using inhibitors. This effect is called the texture inhibition effect. This technique does not require fine particle distribution of inhibitor into steel and therefore does not require high-temperature slab heating, which was previously essential, and is therefore a method that offers significant advantages in terms of production costs and facility maintenance.

However, no inhibitor is present that functions to suppress normal grain growth during primary recrystallization annealing to keep particle size constant or functions to increase sharpness of Goss orientation during secondary recrystallization, and therefore in some cases, the final magnetic properties of such methods were found to be inferior to those of methods using an inhibitor.

As a solution to this problem, PTL 7 describes a technique that makes it possible to have high magnetic flux density in material that does not contain an inhibitor component, by increasing a heating rate in hot-rolled sheet annealing.

CITATION LIST

Patent Literature

PTL 1: JP S40-015644 B
PTL 2: JP S51-013469 B
PTL 3: JP S38-008214 B
PTL 4: JP S52-024116 A
PTL 5: JP 2782086 B2
PTL 6: JP 2000-129356 A
PTL 7: JP 2017-160489 A

SUMMARY

(Technical Problem)

The technique described in PTL 7 was developed by the present inventors to improve the magnetic properties of material that does not contain an inhibitor component. The technique controls the distribution to be dense and precipitate diameter to be small for AlN precipitate in steel, and therefore could be expected to further improve magnetic properties by improving sharpness of Goss orientation after secondary recrystallization, even when applied to material using an inhibitor.

When the inventors tried to apply such a technique to steel that uses an inhibitor, the inventors found that the technique described in PTL 7 did not improve magnetic properties as expected.

The present disclosure is made in view of the technical problem described above. It would be helpful to provide a method of producing a grain-oriented electrical steel sheet that enables further improvement of magnetic properties and stable manufacturing for steel that uses an inhibitor.

(Solution to Problem)

To solve the technical problem described above, the inventors carried out extensive studies focusing on the hot rolling conditions and hot-rolled sheet annealing conditions under which the inhibitor base is formed.

As a result, the inventors found that by controlling within a certain range a relationship between rough rolling delivery temperature of hot rolling and the time from the end of rough rolling to the start of finishing rolling, a relationship that had not been conventionally considered important, and by increasing the heating rate of hot-rolled sheet annealing, a grain-oriented electrical steel sheet having good magnetic properties is stably obtainable, leading to the present disclosure.

The following describes the experiments that successfully led to the present disclosure.

<Experiment 1>

Steel slabs each containing, in mass%, C: 0.075 %, Si: 3.11 %, Mn: 0.05 %, N: 0.0088 %, sol.Al: 0.024 %, and Se: 0.0200 %, with the balance being Fe and inevitable impurity, were produced by continuous casting, then subjected to slab heating including soaking at 1410 °C for 40 min, then hot rolling to a thickness of 2.2 mm. The rough rolling finish temperature and the time from the end of rough rolling to the start of finishing rolling were conducted under two different conditions. The two conditions were 1250 °C for 125 s as condition A and 1100 °C for 200 s as condition B. Hot-rolled sheet annealing in a dry nitrogen atmosphere was then carried out at 1050 °C for 30 s. In the heating process of the hot-rolled sheet annealing, the heating rate from room temperature to 400 °C was 80 °C/s, and the time to reach 900 °C from 600 °C was varied. Further, after the hot-rolled sheet annealing, surface scale was removed by pickling, and the sheets were cold rolled to a thickness of 1.8 mm. Next, the sheets were subjected to intermediate annealing at 1100 °C for 150 s, cold rolling to a thickness of 0.23 mm, and primary recrystallization annealing with decarburization at 830 °C for 150 s in a wet atmosphere of 55 vol% $H_2$ - 45 vol% $N_2$ with a dew point of 60 °C. Subsequently, an annealing separator mainly composed of MgO was applied, and secondary recrystallization annealing was carried out for 15 h at 1200 °C in a hydrogen atmosphere.

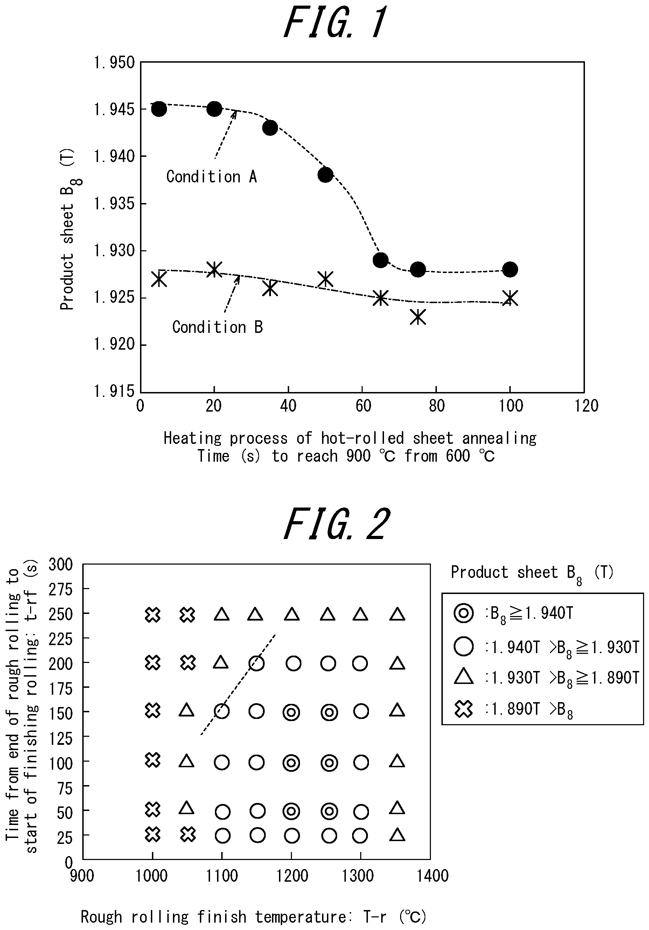

$B_8$ (magnetic flux density when excited at 800 A/m) of each of the samples thus obtained was measured in accordance with the method described in Japanese Industrial Standard JIS C2550. The results of the $B_8$ measurements, organized by the hot rolling conditions, are illustrated in FIG. 1.

From FIG. 1, it can be seen that excellent magnetic properties are obtainable when condition A is paired with a time of 50 s or less to reach 900 °C from 600 °C in the annealing process of hot-rolled sheet annealing. In contrast, condition B has little time dependence, indicating that good magnetism cannot be obtained under any timing conditions.

<Experiment 2>

Steel slabs each containing, in mass%, C: 0.060 %, Si: 3.33 %, Mn: 0.10 %, N: 0.0080 %, sol.Al: 0.021 %, and Se: 0.0140 %, with the balance being Fe and inevitable impurity, were produced by continuous casting then subjected to slab heating including soaking at 1400 °C for 20 min, then hot rolling to a thickness of 2.4 mm. The rough rolling finish temperature and the time from the end of rough rolling to the start of finishing rolling were changed in various ways. Hot-rolled sheet annealing in a dry nitrogen atmosphere was then carried out at 1000 °C for 30 s. In the heating process of the hot-rolled sheet annealing, the heating rate from room temperature to 400 °C was 60 °C/s, followed by a time to reach 900 °C from 600 °C of 35 s. Further, after the hot-rolled sheet annealing, surface scale was removed by pickling, and the sheets were cold rolled to a thickness of 1.5 mm. Next, the sheets were subjected to intermediate annealing at 1050 °C for 100 s, cold rolling to a thickness of 0.23 mm, and primary recrystallization annealing with decarburization at 830 °C for 150 s in a wet atmosphere of 50 vol% $H_2$ - 50 vol% $N_2$ with a dew point of 50 °C. Subsequently, an annealing separator mainly composed of MgO was applied, and secondary recrystallization annealing was carried out for 15 h at 1200 °C in a hydrogen atmosphere.

$B_8$ (magnetic flux density when excited at 800 A/m) of each of the samples thus obtained was measured in accordance with the method described in JIS C2550. FIG. 2 illustrates the results of the $B_8$ measurements arranged in relation to the rough rolling delivery temperature and the time from the end of rough rolling to the start of finishing rolling.

From FIG. 2, it can be seen that a range where good magnetic properties are obtainable is limited to a specific range by the hot rolling conditions. Specifically, when the temperature at the end of rough rolling by the hot rolling is T-r °C and the time from the end of rough rolling to the start of finishing rolling is t-rf s, the following Expressions (1) to (3) need to be satisfied.

In the conventional case without inhibitor component, T-r °C is in a range from 900 °C to 1050 °C, and therefore in terms of the T-r temperature range, conditions were different from those of a conventional case. Further, when an inhibitor component is included, t-rf s often exceeds 200 s, and in this respect conditions were different from those of a conventional case.

$$\text{t-rf} \leq \text{T-r} - 950 \qquad \dots (1)$$

$$1100 \leq \text{T-r} \leq 1300 \qquad \dots (2)$$

$$\text{t-rf} \leq 200 \qquad \dots (3)$$

To summarize the results of the above two experiments, the shorter the time from 600 °C to 900 °C in the heating process of hot-rolled sheet annealing, the better the magnetic properties may be. Further, there is a dependence on the conditions of hot rolling as described above. Although the reason for the above is not necessarily clear, the inventors think as follows.

The present disclosure describes an improvement of the technique described in PTL 7. That is, as described in PTL 7, in an inhibitor-less chemical composition, Al content is low and Si content is high in the steel, and therefore rather than AlN, silicon nitride, which is mainly $Si_3N_4$ in composition, is formed as a precipitate in the steel after hot rolling during the heating process of hot-rolled sheet annealing. With regard to precipitate growth, it is generally known that heat treatment causes so-called Ostwald ripening, in which small precipitates disappear and large precipitates become larger. As applied to $Si_3N_4$, it may be that shortening the heat-up time to 900 °C prevents such distribution and size changes, so that $Si_3N_4$ precipitates remain with a dense distribution and small precipitate size. It is generally known that $Si_3N_4$ is converted to AlN by substitution of Si for Al at 900 °C or more. It is assumed that shortening the heat-up time to 900 °C can make AlN distribution denser and precipitate size smaller after hot-rolled sheet annealing.

A difference between the steel samples using inhibitors targeted in the present experiments and those described in PTL 7 is that the steel samples of the present experiments contain a large amount of Al, and therefore not only $Si_3N_4$ but also AlN precipitates during hot rolling. The dissolution temperatures of AlN and $Si_3N_4$ for the chemical compositions used in the present experiments are calculated here. In making this calculation, we refer to the solubility products of AlN and $Si_3N_4$ precipitated in $\alpha$-phase steel, as described in Non-Patent Literature (NPL) 1 and NPL 2 below.

[NPL 1] Iwayama, Collected abstracts of Meeting of the Japan Institute of Metals (1977) p. 340
[NPL 2] J. Kunze, O. Pungun, and K. Friedrich, Journal of Materials Science Letters 5 (1986) p. 815

That is, the dissolution temperatures of AlN and $Si_3N_4$ for the chemical compositions used in the present experiments were calculated from the solubility products indicated in the non-patent literatures to be about 1280 °C and 970 °C, respectively. The results suggest that AlN precipitates first, followed by $Si_3N_4$ during the temperature decrease due to hot rolling. When there is a large time lag between AlN precipitation and $Si_3N_4$ precipitation, AlN is expected to grow and coarsen.

For example, in Experiment 2 above, when the rough rolling delivery temperature was low and the time between the end of rough rolling and the start of finishing rolling was long, good magnetic properties were not obtained. This may be because the long time between AlN precipitation in rough rolling and the start of finishing rolling promoted coarsening of precipitates and reduced the amount of fine $Si_3N_4$ that appeared afterwards because N was taken up by AlN, and the effect of keeping $Si_3N_4$ fine during the subsequent heating process of hot-rolled sheet annealing was diminished.

Further, the poor magnetic properties even when the rough rolling delivery temperature was very high may be due to the temperature not decreasing until the finishing rolling was completed and $Si_3N_4$ precipitated, increasing the relative amount of coarse AlN.

That is, important to the present disclosure is reducing coarse AlN as much as possible to relatively increase the amount of fine $Si_3N_4$ by controlling hot rolling conditions, and further, to make $Si_3N_4$ substitute with AlN while remaining fine by specifying conditions of the heating process of hot-rolled sheet annealing.

The present disclosure is based on the discoveries described above and further studies. Primary features of the present disclosure are as follows.

1. A method of producing a grain-oriented electrical steel sheet, the method comprising: heating a steel slab having a chemical composition containing (consisting of) C: 0.020 mass% to 0.100 mass%, Si: 2.00 mass% to 5.00 mass%, Mn: 0.01 mass% to 1.00 mass%, sol.Al: 0.010 mass% to 0.040 mass%, N: 0.0040 mass% to 0.0250 mass%, and one or two elements selected from S and Se totaling 0.0020 mass% to 0.0400 mass%, with the balance being Fe and inevitable impurity, to a temperature of 1300 °C or more and hot rolling to obtain a hot-rolled sheet; hot-rolled sheet annealing the hot-rolled sheet; then cold rolling two or more times with intermediate annealing therebetween; then primary recrystallization annealing; then applying an annealing separator that is mainly MgO and secondary recrystallization annealing, wherein when temperature at the end of rough rolling of the hot rolling is T-r °C and time from the end of the rough rolling to the start of finishing rolling is t-rf s, the following Expressions (1) to (3) are satisfied,

$$t\text{-}rf \leq T\text{-}r - 950 \qquad \dots (1)$$

$$1100 \leq T\text{-}r \leq 1300 \qquad \dots (2)$$

$$t\text{-}rf \leq 200 \qquad \dots (3)$$

and time to reach 900 °C from 600 °C in a heating process of the hot-rolled sheet annealing is 50 s or less.

2. The method of producing a grain-oriented electrical steel sheet according to 1, above, wherein during the heating process of the hot-rolled sheet annealing, heating rate in a temperature range from room temperature to 400 °C is 50 °C/s or more.

3. The method of producing a grain-oriented electrical steel sheet according to 1 or 2, above, wherein the chemical composition of the steel slab further contains at least one element selected from the group consisting of Cr: 0.01 mass% to 0.50 mass%, Cu: 0.01 mass% to 0.50 mass%, Ni: 0.01 mass% to 0.50 mass%, Bi: 0.005 mass% to 0.500 mass%, Nb: 0.0010 mass% to 0.0100 mass%, Sn: 0.010 mass% to 0.400 mass%, Sb: 0.010 mass% to 0.150 mass%, Mo: 0.010 mass% to 0.200 mass%, and P: 0.010 mass% to 0.150 mass%.

(Advantageous Effect)

According to the present disclosure, a grain-oriented electrical steel sheet having improved magnetic flux density is obtainable by specifying conditions for hot rolling and shortening the time to reach 900 °C in the heating process of hot-rolled sheet annealing, for material using an inhibitor.

BRIEF DESCRIPTION OF THE DRAWINGS

In the accompanying drawings:

FIG. 1 is a diagram illustrating a relationship between $B_8$ and time taken to reach 900 °C from 600 °C during heating process of hot-rolled sheet annealing; and
FIG. 2 is a diagram illustrating a relationship between rough rolling delivery temperature and time from end of rough rolling to start of finishing rolling, arranged by $B_8$.

DETAILED DESCRIPTION

The present disclosure is described in detail below.
First, the chemical composition of the steel material (slab) used in production of the grain-oriented electrical steel sheet is described.

C: 0.020 mass% to 0.100 mass%

When C is less than 0.020 mass%, precipitation of fine carbide is insufficient or the steel microstructure becomes single-phase $\alpha$-phase, and the steel becomes brittle during casting or hot rolling, causing cracking in the slab or edge cracking at an edge of the steel sheet after hot rolling, which results in defects that interfere with production. On the other hand, when content exceeds 0.100 mass%, then reducing the content during decarburization annealing to 0.005 mass% or less becomes difficult, 0.005 mass% or less being a value where magnetic aging does not occur. The C content is therefore in the range of 0.020 mass% to 0.100 mass%. The lower limit is preferably 0.025 mass%. The upper limit is preferably 0.080 mass%.

Si: 2.00 mass% to 5.00 mass%

Si is an element necessary to increase specific resistance of steel and reduce iron loss. The effect is not sufficient at less than 2.00 mass%. When Si content is more than 5.00 mass%, workability decreases and production by rolling becomes difficult. The Si content is therefore in the range of 2.00 mass% to 5.00 mass%. The lower limit is preferably 2.50 mass%. The upper limit is preferably 4.00 mass%.

Mn: 0.01 mass% to 1.00 mass%

Mn is an element necessary to improve hot workability of steel. The effect is not sufficient at less than 0.01 mass%, while at more than 1.00 mass%, magnetic flux density of the product sheet becomes lower. The Mn content is therefore in the range of 0.01 mass% to 1.00 mass%. The lower limit is preferably 0.02 mass%. The upper limit is preferably 0.30 mass%.

Sol.Al: 0.010 mass% to 0.040 mass%

Al is an element that precipitates by forming AlN and functions as an inhibitor of normal grain growth in secondary recrystallization annealing, and is an important element in the production of the grain-oriented electrical steel sheet. However, when the Al content in terms of acid-soluble Al (sol. Al) is less than 0.010 mass%, the absolute amount of inhibitor is insufficient to inhibit normal grain growth. On the other hand, when the content exceeds 0.040 mass%, AlN undergoes Ostwald ripening and coarsens, and the inhibition of normal grain growth is also insufficient. The Al content as sol.Al is therefore in the range of 0.010 mass% to 0.040 mass%. The lower limit is preferably 0.012 mass%. The upper limit is preferably 0.030 mass%.

N: 0.0040 mass% to 0.0250 mass%

N combines with Al to form AlN and precipitate, AlN being an inhibitor. When the content is less than 0.0040 mass%, the absolute amount of inhibitor is insufficient to inhibit normal grain growth. On the other hand, when the content exceeds 0.0250 mass%, the slab may bulge during hot rolling. The N content is therefore in the range of 0.0040 mass% to 0.0250 mass%. The lower limit is preferably 0.0050 mass%. The upper limit is preferably 0.0100 mass%.

One or two elements selected from S and Se totaling 0.0020 mass% to 0.0400 mass%

S and Se combine with Mn to form MnS and MnSe, which are inhibitors. However, when total content of one alone or both together is less than 0.0020 mass%, the inhibitor effect is not sufficient. On the other hand, when 0.0400 mass% is exceeded, the inhibitors undergo Ostwald ripening and coarsen, and the inhibition of normal grain growth is insufficient. The total content of S and Se is therefore in the range of 0.0020 mass% to 0.0400 mass%. The lower limit is preferably 0.0040 mass%. The upper limit is preferably 0.0300 mass%. The lower limit is more preferably 0.0050 mass%. The upper limit is more preferably 0.0270 mass%.

Aside from the above components, the balance of the steel material used in the production of the grain-oriented electrical steel sheet is substantially Fe and inevitable impurity.

The chemical composition may further contain at least one element selected from the group consisting of Cr: 0.01 mass% to 0.50 mass%, Cu: 0.01 mass% to 0.50 mass%, Ni: 0.01 mass% to 0.50 mass%, Bi: 0.005 mass% to 0.500 mass%, Nb: 0.0010 mass% to 0.0100 mass%, Sn: 0.010 mass% to 0.400 mass%, Sb: 0.010 mass% to 0.150 mass%, Mo: 0.010 mass% to 0.200 mass%, and P: 0.010 mass% to 0.150 mass%.

Each of the above elements has an effect of improving the magnetic properties of the grain-oriented electrical steel sheet, but when the content is lower than the above lower limit, a sufficient improvement in magnetic properties cannot be achieved. On the other hand, when the content exceeds the above upper limit, the development of secondary recrystallized grains is inhibited, and magnetic properties may instead deteriorate.

Next, the method of production according to the present disclosure is described. The method of production may use a typical method for producing an electrical steel sheet. That is, molten steel having the defined composition is made into a steel slab by a normal ingot casting or continuous casting method. Adding the components described above in an intermediate process is difficult, therefore the components are preferably added at the molten steel stage. The steel slab is heated and hot rolled by a normal method. The chemical composition according to the present disclosure contains a large amount of Al, N, Mn, S, Se, and the like, which form inhibitors, and therefore a heating temperature of 1300 °C or more is necessary to form a solid solution of such elements. The heating temperature is preferably 1350 °C or more. The upper limit of the heating temperature is not particularly specified, but the melting point of steel containing Si is about 1460 °C, and therefore the upper limit needs to be equal to or less than this temperature.

Further, for the reasons mentioned above, the temperature at the end of the rough rolling by hot rolling (T-r °C) and the time from the end of the rough rolling to the start of finishing rolling (t-rf s) need to be controlled within the following Expressions (1) to (3). The temperature at the end of the rough rolling is preferably 1150 °C or more and/or 1275 °C or less, and the time from the end of the rough rolling to the start of finishing rolling is preferably 150 s or less.

$$\text{t-rf} \leq \text{T-r} - 950 \qquad \ldots (1)$$

$$1100 \leq \text{T-r} \leq 1300 \qquad \ldots (2)$$

$$\text{t-rf} \leq 200 \qquad \ldots (3)$$

Next, hot-rolled sheet annealing is carried out. As indicated in the experimental results and discussion, the time to reach 900 °C from 600 °C during the heating process needs to be 50 s or less. The time is preferably 40 s or less.

Further, the heating rate in the temperature range from room temperature to 400 °C being 50 °C/s or more can shorten the residence time in the low temperature range where AlN and $Si_3N_4$ are likely to precipitate, as inferred from the mechanism mentioned above. This may delay generation of precipitation nuclei and growth of precipitates, and inhibit precipitate coarsening, and is therefore very effective. Increasing the heating rate requires specialized facilities, which increases costs, and therefore an upper limit of about 300 °C/s is preferable. There are no particular restrictions on heating method. To achieve the heating rate of 50 °C/s or more, conventional heating methods using heaters or burners as well as induction heating and electrical resistance heating methods may be considered.

After the hot-rolled sheet annealing, the steel sheet is subjected to cold rolling and intermediate annealing, then cold rolling again to obtain a final sheet thickness, then primary recrystallization annealing. In the cold rolling, increasing the sheet temperature to carry out warm rolling at 100 °C to 300 °C and also carrying out aging treatment in the range of 100 °C to 300 °C once or more during the cold rolling is effective in order to change the recrystallized texture and improve magnetic properties. Further, in the intermediate annealing, holding at 900 °C or more for 30 s or more is effective in improving the microstructure and therefore preferable. More preferable is holding at 1000 °C or more for 60 s or more.

The primary recrystallization annealing may also serve to decarburize the steel sheet. From the viewpoint of decarburization, the annealing temperature of the primary recrystallization annealing is preferably 800 °C or more. The annealing temperature of the primary recrystallization annealing is preferably 900 °C or less. Further, from the viewpoint of decarburization, the atmosphere is preferably a wet atmosphere. Further, for good final magnetic properties, the heating rate to the holding temperature in the primary recrystallization annealing is preferably 50 °C/s or more. The heating rate to the holding temperature in the primary recrystallization annealing is preferably 1000 °C/s or less.

Subsequently, an annealing separator consisting mainly of MgO is applied to the front surface of the steel sheet, followed by secondary recrystallization annealing to develop secondary grains having Goss orientation and form a forsterite film. In the secondary recrystallization annealing, in order to remove the inhibitor component from the steel substrate (purification), holding at 1100 °C or more for 5 h or more is preferable. 1150 °C or more for 10 h or more is more preferable. Further, purification is promoted by a $H_2$ atmosphere, and therefore the atmosphere in the high temperature range preferably contains 50 vol% or more of $H_2$.

After the secondary recrystallization annealing, water washing, brushing, or pickling is effective for removing adhered annealing separator. Subsequently, further flattening annealing to adjust the shape is effective for reducing iron loss.

In the case of using the steel sheet in a stack, applying an insulation coating to the steel sheet surface before or after the flattening annealing is effective for reducing iron loss. In such a case, in order to reduce iron loss, the coating is preferably capable of imparting tension to the steel sheet. Further, a method of tension coating application through a binder, or coating by depositing an inorganic substance onto the steel sheet surface layer by physical vapor deposition or chemical vapor deposition is preferable, as coating adhesion is excellent and a considerable iron loss reduction effect is achieved.

In the method of production according to the present disclosure, anything not described herein may be a conventional method.

EXAMPLES

[Example 1]

Steel slabs each containing, in mass%, C: 0.082 %, Si: 3.12 %, Mn: 0.07 %, N: 0.0072 %, sol.Al: 0.027 %, S: 0.0050 %, and Se: 0.0150 %, with the balance being Fe and inevitable impurity, were produced by continuous casting, then subjected to slab heating including soaking at 1350 °C for 40 min, then hot rolling to a thickness of 2.7 mm. The rough rolling finish temperature and the time from the end of rough rolling to the start of finishing rolling were changed in various ways. Values for time taken are listed in Table 1.

Hot-rolled sheet annealing in a dry nitrogen atmosphere was then carried out at 1100 °C for 30 s. In the heating process of the hot-rolled sheet annealing, the heating rate from room temperature to 400 °C was 75 °C/s, and the time to reach 900 °C from 600 °C was varied as listed in Table 1. Further, after the hot-rolled sheet annealing, surface scale was removed by pickling, and the sheets were cold rolled to a thickness of 1.8 mm. Next, the sheets were subjected to intermediate annealing at 1070 °C for 150 s, cold rolling to a thickness of 0.23 mm, and primary recrystallization annealing with decarburization at 835 °C for 150 s in a wet atmosphere of 50 vol% $H_2$ - 50 vol% $N_2$ with a dew point of 60 °C. Subsequently, an annealing separator mainly composed of MgO was applied, and secondary recrystallization annealing was carried out for 15 h at 1200 °C in a hydrogen atmosphere. $B_8$ (magnetic flux density when excited at 800 A/m) of each of the samples thus obtained was measured by the method described in JIS C2550. The $B_8$ measurements are listed in Table 1.

[Table 1]

Table 1

| No. | Hot rolling Rough rolling finish temperature T-r °C | Time from end of rough rolling to start of finishing rolling t-rf s | Expression (1) satisfied? | Hot-rolled sheet annealing Time from 600 °C to 900 °C s | Final magnetic property $B_8$ T | Remarks |
|---|---|---|---|---|---|---|
| 1 | 1100 | 40 | O | 35 | 1.934 | Example |
| 2 | 1100 | 40 | O | 85 | 1.921 | Comparative Example |
| 3 | 1100 | 125 | O | 35 | 1.935 | Example |
| 4 | 1100 | 125 | O | 85 | 1.899 | Comparative Example |
| 5 | 1100 | 250 | × | 35 | 1.919 | Comparative Example |
| 6 | 1100 | 250 | × | 85 | 1.922 | Comparative Example |
| 7 | 1200 | 40 | O | 15 | 1.942 | Example |
| 8 | 1200 | 40 | O | 35 | 1.942 | Example |
| 9 | 1200 | 40 | O | 85 | 1.925 | Comparative Example |
| 10 | 1200 | 125 | O | 15 | 1.946 | Example |

(continued)

| No. | Hot rolling<br>Rough rolling finish temperature T-r<br>°C | Time from end of rough rolling to start of finishing rolling t-rf<br>s | Expression (1) satisfied? | Hot-rolled sheet annealing<br>Time from 600 °C to 900 °C<br>s | Final magnetic property<br>B$_8$<br>T | Remarks |
|---|---|---|---|---|---|---|
| 11 | 1200 | 125 | O | 35 | 1.944 | Example |
| 12 | 1200 | 125 | O | <u>85</u> | 1.911 | Comparative Example |
| 13 | 1200 | <u>250</u> | O | 15 | 1.916 | Comparative Example |
| 14 | 1200 | <u>250</u> | O | 35 | 1.92 | Comparative Example |
| 15 | 1200 | <u>250</u> | O | <u>85</u> | 1.905 | Comparative Example |
| 16 | 1300 | 40 | O | 35 | 1.935 | Example |
| 17 | 1300 | 40 | O | <u>85</u> | 1.916 | Comparative Example |
| 18 | 1300 | 125 | O | 35 | 1.932 | Example |
| 19 | 1300 | 125 | O | <u>85</u> | 1.888 | Comparative Example |
| 20 | 1300 | <u>250</u> | O | 35 | 1.906 | Comparative Example |
| 21 | 1300 | 250 | O | <u>85</u> | 1.875 | Comparative Example |

As indicated in Table 1, when the relationship between the temperature at the end of rough rolling and the time from the end of rough rolling to the start of finishing rolling conforms to the present disclosure, and the time to reach 900 °C from 600 °C conforms to the present disclosure, a grain-oriented electrical steel sheet having excellent magnetic flux density B$_8$ of 1.932 T or more is obtainable.

[Example 2]

Steel slabs each having a chemical composition listed in Table 2, with the balance being Fe and inevitable impurity, were produced by continuous casting, reheated to a temperature of 1425 °C, and hot rolled to a thickness of 2.2 mm. The rough rolling finish temperature was 1250 °C, and the time from the end of rough rolling to the start of finishing rolling was 100 s. Hot-rolled sheet annealing in a dry nitrogen atmosphere was carried out at 950 °C for 60 s. In the heating process, the heating rate from room temperature to 400 °C was 100 °C/s, and the time to reach 900 °C from 600 °C was 20 s. After the hot-rolled sheet annealing, surface scale was removed by pickling, then sheets were subjected to cold rolling to a thickness of 2.0 mm, intermediate annealing at 1000 °C for 30 s, and cold rolling to a thickness of 0.20 mm. Further, primary recrystallization annealing with decarburization was carried out at 835 °C for 150 s in a wet atmosphere of 50 vol% H$_2$ - 50 vol% N$_2$ with a dew point of 50°C. Subsequently, an annealing separator mainly composed of MgO was applied, and secondary recrystallization annealing was carried out for 5 h at 1200 °C in a hydrogen atmosphere. B$_8$ (magnetic flux density when excited at 800 A/m) of each of the samples thus obtained was measured by the method described in JIS C2550. The B$_8$ measurements are listed in Table 2.

Table 2

Table 2

| No. | C mass% | Si mass% | Mn mass% | sol.Al mass% | N mass% | S mass% | Se mass% | Other mass% | $B_8$ T | Remarks |
|---|---|---|---|---|---|---|---|---|---|---|
| 1 | 0.025 | 2.41 | 0.03 | 0.015 | 0.0045 | 0.0012 | 0.0200 | - | 1.941 | Example |
| 2 | 0.049 | 3.87 | 0.42 | 0.028 | 0.0105 | 0.0058 | 0.0120 | - | 1.938 | Example |
| 3 | 0.091 | 4.26 | 0.13 | 0.039 | 0.0206 | 0.0015 | 0.0040 | - | 1.938 | Example |
| 4 | 0.012 | 2.99 | 0.12 | 0.016 | 0.0065 | 0.0015 | 0.0200 | - | 1.868 | Comparative Example |
| 5 | 0.105 | 3.25 | 0.15 | 0.023 | 0.0081 | 0.0009 | 0.0150 | - | 1.725 | Comparative Example |
| 6 | 0.037 | 1.56 | 0.26 | 0.019 | 0.0055 | 0.0013 | 0.0120 | - | 1.853 | Comparative Example |
| 7 | 0.051 | 5.51 | 0.18 | 0.025 | 0.0053 | 0.0035 | 0.0130 | - | 1.551 | Comparative Example |
| 8 | 0.085 | 3.56 | 1.08 | 0.016 | 0.0061 | 0.0015 | 0.0080 | - | 1.910 | Comparative Example |
| 9 | 0.072 | 3.48 | 0.08 | 0.005 | 0.0066 | 0.0063 | 0.0050 | - | 1.912 | Comparative Example |
| 10 | 0.073 | 3.21 | 0.09 | 0.047 | 0.0052 | 0.0022 | 0.0200 | - | 1.859 | Comparative Example |
| 11 | 0.050 | 2.87 | 0.21 | 0.018 | 0.0023 | 0.0021 | 0.0170 | - | 1.825 | Comparative Example |
| 12 | 0.058 | 4.05 | 0.25 | 0.021 | 0.0290 | 0.0013 | 0.0150 | - | 1.593 | Comparative Example |
| 13 | 0.032 | 3.65 | 0.18 | 0.014 | 0.0099 | 0.0009 | - | - | 1.546 | Comparative Example |
| 14 | 0.065 | 3.22 | 0.12 | 0.012 | 0.0086 | 0.0210 | 0.0250 | - | 1.570 | Comparative Example |
| 15 | 0.064 | 3.36 | 0.25 | 0.021 | 0.0059 | 0.0026 | 0.0180 | P:0.120, Cr:0.03, Cu:0.32 | 1.957 | Example |
| 16 | 0.036 | 3.40 | 0.21 | 0.020 | 0.0042 | 0.0038 | 0.0160 | Sb:0.120, Mo:0.015, Ni:0.02 | 1.955 | Example |
| 15 | 0.032 | 3.04 | 0.05 | 0.015 | 0.0088 | 0.0012 | 0.0210 | Mo:0.150, Cu:0.03, Sn:0.330 | 1.948 | Example |
| 16 | 0.038 | 3.37 | 0.09 | 0.032 | 0.0079 | 0.0180 | - | Sb:0.030, Bi:0.006, Nb:0.0025 | 1.949 | Example |
| 15 | 0.037 | 3.08 | 0.13 | 0.024 | 0.0075 | 0.0024 | 0.0180 | P:0.040, Bi:0.280, Ni:0.48 | 1.950 | Example |
| 16 | 0.037 | 3.51 | 0.20 | 0.029 | 0.0068 | 0.0018 | 0.0180 | Nb:0.0085, Sn:0.050, Cr:0.42 | 1.948 | Example |

EP 4 450 655 A1

As indicated in Table 2, when a steel material having a chemical composition that conforms to the present disclosure is used, a grain-oriented electrical steel sheet having excellent magnetic flux density is obtainable.

[Example 3]

Steel slabs each containing, in mass%, C: 0.039 %, Si: 3.35 %, Mn: 0.06 %, N: 0.0088 %, sol.Al: 0.030 %, S: 0.0054 %, and Se: 0.0110 %, with the balance being Fe and inevitable impurity, were produced by continuous casting, then subjected to slab heating including soaking at 1400 °C for 20 min, then hot rolling to a thickness of 2.7 mm. The rough rolling finish temperature was 1150 °C, and the time from the end of rough rolling to the start of finishing rolling was changed in various ways. Values for time taken are listed in Table 3.

Hot-rolled sheet annealing in a dry nitrogen atmosphere was then carried out at 1000 °C for 30 s. In the heating process of the hot-rolled sheet annealing, the heating rate from room temperature to 400 °C was varied as listed in Table 3, and the time to reach 900 °C from 600 °C was 25 s. Further, after the hot-rolled sheet annealing, surface scale was removed by pickling, and the sheets were cold rolled to a thickness of 1.5 mm. Next, the sheets were subjected to intermediate annealing at 1070 °C for 150 s, cold rolling to a thickness of 0.23 mm, and primary recrystallization annealing with decarburization at 835 °C for 150 s in a wet atmosphere of 45 vol% $H_2$ - 55 vol% $N_2$ with a dew point of 60 °C. Subsequently, an annealing separator mainly composed of MgO was applied, and secondary recrystallization annealing was carried out for 5 h at 1200 °C in a hydrogen atmosphere. $B_8$ (magnetic flux density when excited at 800 A/m) of each of the samples thus obtained was measured by the method described in JIS C2550. The $B_8$ measurements are listed in Table 3.

[Table 3]

Table 3

| No. | Time from end of rough rolling to start of finishing rolling t-rf<br><br>s | Expression (1) satisfied? | Hot-rolled sheet annealing<br><br>Heating rate from room temperature to 400 °C<br>°C/s | Final magnetic property<br><br>$B_8$<br><br>T | Remarks |
|---|---|---|---|---|---|
| 1 | 100 | O | 35 | 1.934 | Example |
| 2 | 100 | O | 125 | 1.941 | Example |
| 3 | <u>250</u> | × | 35 | 1.915 | Comparative Example |
| 4 | <u>250</u> | × | 125 | 1.916 | Comparative Example |

As indicated in Table 3, when the relationship between the time from the end of rough rolling to the start of finishing rolling and the heating rate of hot-rolled sheet annealing conforms to the present disclosure and the heating rate of hot-rolled sheet annealing conforms to the present disclosure, a grain-oriented electrical steel sheet having excellent magnetic flux density $B_8$ of 1.934 T or more is obtainable.

**Claims**

1. A method of producing a grain-oriented electrical steel sheet, the method comprising:

heating a steel slab having a chemical composition containing C: 0.020 mass% to 0.100 mass%, Si: 2.00 mass% to 5.00 mass%, Mn: 0.01 mass% to 1.00 mass%, sol.Al: 0.010 mass% to 0.040 mass%, N: 0.0040 mass% to 0.0250 mass%, and one or two elements selected from S and Se totaling 0.0020 mass% to 0.0400 mass%, with the balance being Fe and inevitable impurity, to a temperature of 1300 °C or more and hot rolling to obtain a hot-rolled sheet; hot-rolled sheet annealing the hot-rolled sheet; then cold rolling two or more times with intermediate annealing therebetween; then primary recrystallization annealing; then applying an annealing separator that is mainly MgO and secondary recrystallization annealing, wherein
when temperature at the end of rough rolling of the hot rolling is T-r °C and time from the end of the rough rolling to the start of finishing rolling is t-rf s, the following Expressions (1) to (3) are satisfied,

$$t\text{-}rf \leq T\text{-}r - 950 \qquad \dots (1)$$

$$1100 \leq T\text{-}r \leq 1300 \qquad \dots (2)$$

$$t\text{-}rf \leq 200 \qquad \dots (3)$$

and time to reach 900 °C from 600 °C in a heating process of the hot-rolled sheet annealing is 50 s or less.

2. The method of producing a grain-oriented electrical steel sheet according to claim 1, wherein during the heating process of the hot-rolled sheet annealing, heating rate in a temperature range from room temperature to 400 °C is 50 °C/s or more.

3. The method of producing a grain-oriented electrical steel sheet according to claim 1 or 2, wherein the chemical composition of the steel slab further contains at least one element selected from the group consisting of Cr: 0.01 mass% to 0.50 mass%, Cu: 0.01 mass% to 0.50 mass%, Ni: 0.01 mass% to 0.50 mass%, Bi: 0.005 mass% to 0.500 mass%, Nb: 0.0010 mass% to 0.0100 mass%, Sn: 0.010 mass% to 0.400 mass%, Sb: 0.010 mass% to 0.150 mass%, Mo: 0.010 mass% to 0.200 mass%, and P: 0.010 mass% to 0.150 mass%.

# FIG. 1

Heating process of hot-rolled sheet annealing
Time (s) to reach 900 ℃ from 600 ℃

# FIG. 2

Rough rolling finish temperature: T-r (℃)

## INTERNATIONAL SEARCH REPORT

International application No.

**PCT/JP2023/005574**

### A. CLASSIFICATION OF SUBJECT MATTER

***C21D 8/12***(2006.01)i; ***C22C 38/00***(2006.01)i; ***C22C 38/60***(2006.01)i; ***H01F 1/147***(2006.01)i
FI:   C21D8/12 B; H01F1/147 175; C22C38/00 303U; C22C38/60

According to International Patent Classification (IPC) or to both national classification and IPC

### B. FIELDS SEARCHED

Minimum documentation searched (classification system followed by classification symbols)

C21D8/12; C22C38/00-38/60; H01F1/147

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 9-316537 A (KAWASAKI STEEL CORP.) 09 December 1997 (1997-12-09) paragraphs [0010]-[0014], [0031], [0068]-[0081], [0088], [0102]-[0137] | 1, 3 |
| Y | | 2-3 |
| Y | JP 2020-70477 A (JFE STEEL CORP.) 07 May 2020 (2020-05-07) paragraphs [0013]-[0017], [0028] | 2-3 |
| Y | US 2013/0160897 A1 (CENTRO SVILUPPO MATERIALI S.P.A.) 27 June 2013 (2013-06-27) paragraphs [0043]-[0086] | 1-3 |
| Y | JP 2011-219793 A (NIPPON STEEL CORP.) 04 November 2011 (2011-11-04) paragraphs [0031], [0039]-[0041] | 1-3 |
| A | JP 8-13036 A (KAWASAKI STEEL CORP.) 16 January 1996 (1996-01-16) claim 1 | 1-3 |
| A | WO 2017/073615 A1 (NIPPON STEEL & SUMITOMO METAL CORP.) 04 May 2017 (2017-05-04) claim 3, paragraphs [0050]-[0054], tables 3-5 | 1-3 |

☐ Further documents are listed in the continuation of Box C.     ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 March 2023** | **04 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/005574**

| Patent document cited in search report | | | Publication date (day/month/year) | Patent family member(s) | | | Publication date (day/month/year) |
|---|---|---|---|---|---|---|---|
| JP | 9-316537 | A | 09 December 1997 | (Family: none) | | | |
| JP | 2020-70477 | A | 07 May 2020 | (Family: none) | | | |
| US | 2013/0160897 | A1 | 27 June 2013 | BR | 112012018799 | A2 | |
| | | | | CN | 102834528 | A | |
| | | | | EP | 2516686 | A1 | |
| | | | | IT | RM20090681 | A1 | |
| | | | | KR | 10-2012-0130172 | A | |
| | | | | PL | 2516686 | T3 | |
| | | | | RU | 2012130313 | A | |
| | | | | WO | 2011/077470 | A1 | |
| JP | 2011-219793 | A | 04 November 2011 | (Family: none) | | | |
| JP | 8-13036 | A | 16 January 1996 | (Family: none) | | | |
| WO | 2017/073615 | A1 | 04 May 2017 | US | 2018/0305784 | A1 | |
| | | | | claim 3, paragraphs [0140]-[0144], tables 3-5 | | | |
| | | | | BR | 112018007877 | A2 | |
| | | | | CN | 108138291 | A | |
| | | | | EP | 3369834 | A1 | |
| | | | | KR | 10-2018-0055879 | A | |
| | | | | PL | 3369834 | T3 | |
| | | | | RU | 2695736 | C1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S40015644 B
- JP S51013469 B
- JP S38008214 B
- JP S52024116 A
- JP 2782086 B
- JP 2000129356 A
- JP 2017160489 A

**Non-patent literature cited in the description**

- **IWAYAMA.** *Collected abstracts of Meeting of the Japan Institute of Metals,* 1977, 340
- **J. KUNZE ; O. PUNGUN ; K. FRIEDRICH.** *Journal of Materials Science Letters,* 1986, vol. 5, 815